# EUROPEAN PATENT APPLICATION

(11) **EP 1 175 824 A1**
(43) Date of publication of application: **30.01.2002**
(21) Application number: 00921082.4
(22) Date of filing: 28.04.2000
(51) Int. Cl.: A01G 13/02, A01G 13/10

(54) **CYLINDRICAL ARTICLE FOR USE IN CONTROLLING GROWTH OF TREE AND METHOD FOR CONTROLLING GROWTH OF TREE**

(30) Priority: 30.04.1999 JP 12414899
(71) Applicant: Phytoculture Control Co., Ltd.,, Izumisano-shi, Osaka 598-0022 (JP)
(72) Inventor: AKAI, Tatsuo, Phytoculture Control Co., Ltd., Izumisano-shi, Osaka 598-0022 (JP)
(74) Representative: von Kreisler, Alek, Dipl.-Chem.
(86) International application number: JP0002803
(87) International publication number: WO0065899

(57) **Abstract**

The present invention relates to a cylindrical article for controlling the growth of a tree, and a method for controlling the growth of a tree. There are provided a cylindrical article for controlling the growth of a tree characterized in that it is made of a material which cuts off red rays having a wavelength of 560 to 700 nm with a maximum cutting percentage of 30 to 50 % and 100 % of ultraviolet rays having a wavelength of 400 nm or less, a cylindrical article for controlling the growth of a tree characterized in that it is made of a material which cuts off infrared rays having a wavelength of 700 nm or greater with a maximum cutting percentage of 50 to 80 % and 100 % of ultraviolet rays having a wavelength of 400 nm or less, and a cylindrical article for controlling the growth of a tree characterized in that it is made of a material which cuts off blue rays having a wavelength of 400 to 500 nm with a maximum cutting percentage of 30 to 80 % and 100 % of ultraviolet rays raye d a wavelength of 400 nm or less.

## Description

### Technical Field

The present invention relates to a cylindrical article for controlling the growth of a tree, and a method for controlling the growth of a tree.

### Background Art

It has been hitherto known that a plastic cylindrical article having a circular or hexagonal cross section, which, upon planting a seedling of trees such as conifers such as pine, cedar and cypress as well as broad-leaved trees, protects sprouts, leaves of the seedling from browsing damage by animals such as deer, and promotes the growth of a tree (see, for example, Japanese Utility Model No. 3009585). Such the plastic cylindrical article having a hexagonal cross section is available from Phytoculture Control Co., Ltd. under the trade name of "Hexatube".

It has been said that such the cylindrical article can promote the growth of a tree by so-called greenhouse effect. That is, the cylindrical article maintains an inside temperature thereof higher than an outside temperature thereof, prevents wind shake of the tree, and increases the carbon dioxide concentration which promotes plant photosynthesis.

Although for promotion of the growth of the tree, it is desired that the growth is further promoted depending upon a kind of the tree, on the other hand, unusual growth phenomena such as downward-growing against in negative geotropism of shoot growth, thereby, the inability of elongation of the tree toward an upper portion of the cylindrical article may occur in course of the growth of the tree.

In view of the above situation, it is desired that means for controlling the growth of the tree having various degrees of growth promoting or inhibiting effect are appeared.

### Disclosure of the Invention

The present invention was done under such the situation, and provides, in the first aspect, a cylindrical article for controlling the growth of a tree characterized in that it is made of a material which cuts off red rays having a wavelength of 560 to 700 nm with a maximum cutting percentage of 30 to 50 % and 100 % of ultraviolet rays having a wavelength 400 nm or less (hereinafter, often referred to as "red rays-cutting off type cylindrical article").

In addition, in the second aspect, the present invention provides a cylindrical article for controlling the growth of a tree characterized in that it is made of a material which cuts off infrared rays having a wavelength of 700 nm or greater with a maximum cutting percentage of 50 to 80 % and 100 % of ultraviolet rays having a wavelength of 400 nm or less (hereinafter, often referred to as "infrared rays-cutting off type cylindrical article").

In addition, in the third aspect, the present invention provides a cylindrical article for controlling the growth of a tree characterized in that it is made of a material which cuts off blue rays having a wavelength of 400 to 500 nm with a maximum cutting percentage of 30 to 80 % and 100 % of ultraviolet rays having a wavelength of 400 nm or less (hereinafter, often referred to as "blue rays-cutting offtype cylindrical article").

In addition, in the fourth aspect, the present invention provides a set of cylindrical articles for controlling the growth of a tree composing an optional combination of two or more of the cylindrical articles for controlling the growth of a tree of the first, second and third aspects of the present invention, and a cylindrical article for controlling the growth of a tree which is made of a material cutting off 100 % of ultraviolet rays having a wavelength of 400 nm or less.

Further, in the fifth aspect, the present invention provides a method for controlling the growth of a tree composing:
(a) cutting off 100 % of ultraviolet rays having a wavelength of 400 nm or less, and
(b) cutting off red rays having a wavelength of 560 to 700 nm with a maximum cutting percentage of 30 to 50 %, or
(c) cutting off infrared rays having a wavelength of 700 nm or greater with a maximum cutting percentage of 50 to 80%, or
(d) cutting off blue rays having a wavelength of 400 to 500 nm with a maximum cutting percentage of 30 to 80 %.

In the present specification, promotion or inhibition of the growth of a tree is referred to as controlling of the growth of a tree. Examples of trees to which the present invention is applicable include conifers selected from Pine family (*Pinus densiflora, Pinus Thunbergii*), Cedar family (*Cryptomeria japonica, Chamaecyparis obtusa, Chamaecyparis pisifera*, *Thujopsis dolabrata*, *Thuja Standishii*), Fir family (*Abies sachalinensis*, *Abies firma*), Torreya *(Torreya nucifera*), Spruces (*Picea jezoensis*) and Larch (*Larix leptolepis*) or broad-leaved trees selected from Keaki (*Zelkova serrata*), Kasi family (*Quercus glauca*, *Quercus myrsineafolia*), Oak family (*Quercus mongolica*, *Quercus serrata*, *Quercus acutissima*), Tallowtree (*Sapium sebiferum*), Beech family (*Fagus crenata*, *Fagus japonica*), Cheetnut (*Castanea crenata*), Maples, Birches and Cherries.

### Brief Description of Drawing

Figure 1 is a broken line graph showing a total elongation of shoot of *Chamaecyparis obtusa* (Hinoki) measured at about one month intervals, where red rays or infrared rays were cut off.

Figure 2 is a bar graph showing an average elongation per day for one month of *C. obtusa.*

Figure 3 is a broken line graph showing a total elongation of *C. obtusa* measured at about one month intervals, where red rays or blue rays were cut off.

Figure 4 is a broken line graph showing a total elongation of *Cryptomeria japonica* (Sugi) measured at about one month intervals, where red rays or blue rays were cut off.

### Detailed Description of the Invention

Materials which constitute cylindrical articles for controlling the growth of a tree characterized in the first, second and third aspects of the present invention have the particular optical properties.

Firstly, said materials cut off 100% of ultraviolet rays having a wavelength of 400 nm or less.

In addition to such the property, in the first aspect, the material cuts off red rays having a wavelength of 560 to 700 nm with a maximum cutting percentage of 30 to 50 %, preferably red rays having a wavelength of 600 to 680 nm with a cutting percentage of 30 to 40 %. In the second aspect, the material cuts off infrared rays having a wavelength of 700 nm or greater with a cutting percentage of 50 to 80 %, preferably infrared rays having a wavelength of 780 to 900 nm with a cutting percentage of 70 to 80 %. In the third aspect, the material cuts off blue rays having a wavelength of 400 to 500 nm with a maximum cutting percentage of 30 to 80 %, preferably blue rays having a wavelength of 420 to 480 nm with a cutting percentage of 40 to 60 %.

A base of the material having the optical properties is a plastic such as polypropylene and polyethylene. Ultraviolet rays may be cut off by incorporating an ultraviolet rays-absorbing agent in the base material. Examples of the ultraviolet rays-absorbing agent include benzotriazole series, benzophenone series, salicylate series and cyanoacrylate series ultraviolet rays-absorbing agents, and the like. The ultraviolet absorbing agents may simultaneously have the function as an anti-deteriorating agent.

In addition, red, infrared and blue rays may be cut off by mingling and dispersing a suitable ray-absorbing agent such as phthalocyanine and naphthalocyanine compounds in the material.

For example, the phthalocyanine compounds cut off ultraviolet rays and the naphthalocyanine compounds cut off both of ultraviolet rays and infrared rays. In addition, phthalocyanine blue, or the like is used to cut off red rays, and quinacridone red, monoazo yellow, or the like is used to cut off blue rays.

Chemical structures of these agents are represented below: 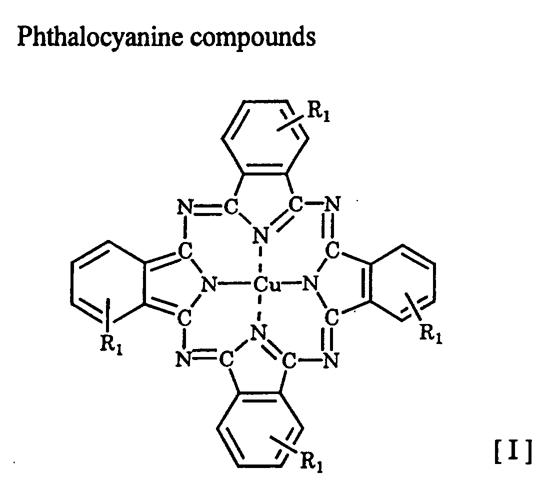
R₁=H,
R₁=Cl (12 to 16)
R₁=Cl, Br (11 to 16)

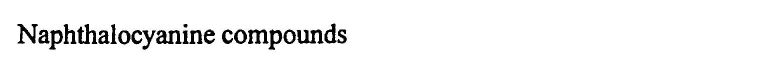

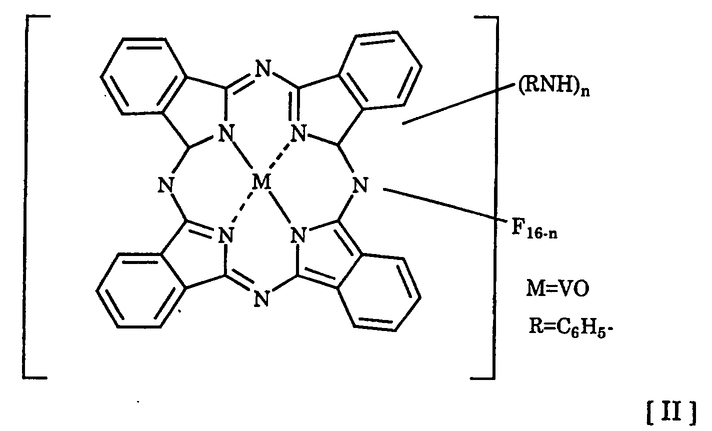

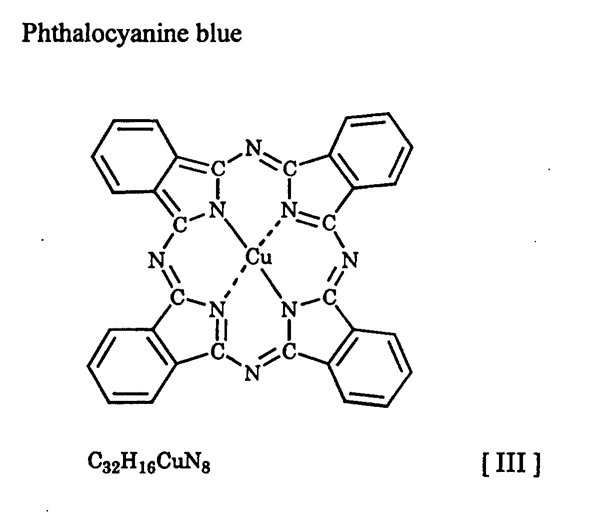

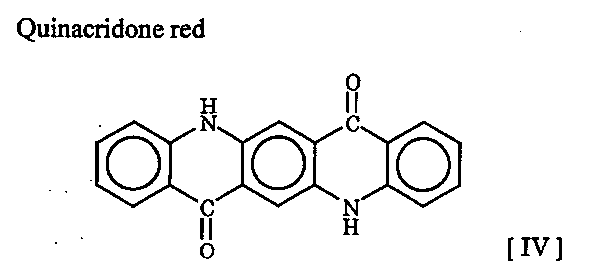

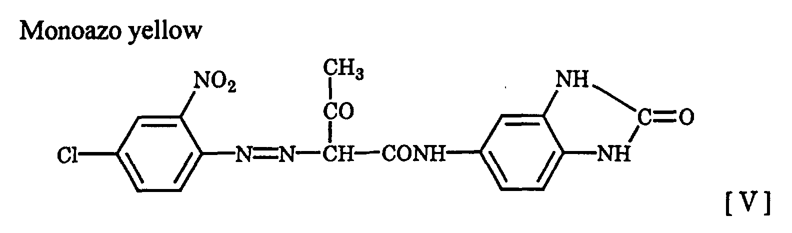

An amount of the agents to be incorporated varies depending upon a kind of the plastic and a thickness of the cylindrical article and may be properly selected from a range of 0.05 to 0.5 part by weight of the phthalocyanine compounds, 0.05 to 0.5 part by weight of phthalocyanine blue, 0.0001 to 0.01 part by weight of quinacridone red and 0.001 to 0.1 part by weight of monoazo yellow relative to 100 parts by weight of the plastic.

The cylindrical article of the present invention may be manufactured by molding a plastic melt, in which the ultraviolet-absorbing agent and the pigment as described above are incorporated and mixed, according to the conventional procedure.

Alternatively, the cylindrical article may be manufactured by firstly producing a sheet from the melt as described above and then folding it.

A cross section of the cylindrical article is an even polygon greater than tetragon or a circle, but preferably it is a hexagon. A thickness of the cylindrical article is generally 0.5 to 10 mm, and a length of the cylindrical varies depending upon purposes such as a kind of the tree and is generally 0.9 to 1.8 m.

The object of the present invention can be also accomplished, for example, by sticking a plastic film, which absorbs red, infrared or blue rays, on an outer and/or inner surface of the cylindrical article which cuts off 100 % of ultraviolet rays. Such the aspect is also within the scope of the present invention.

### Best mode for carrying out the Invention

Experimental Examples are illustrated below in which the growth of a tree was controlled by using the cylindrical article of the present invention.

### Experimental Example 1

Eleven seedlings of Chamaecyparis obtusa (Hinoki) having a height of about 40 to 50 cm were divided into three groups of the first, second and third groups such that each average seedling height of the groups becomes approximately equal. On May 26, 1998, the day after about one month from potting, each of seedlings of the first group was covered with a red rays-cutting off type cylindrical article of the first aspect of the present invention, each of seedlings of the second group was covered with an infrared rays-cutting off type cylindrical article of the second aspect of the present invention and, as a control, each of seedlings of the third group was covered with a cylindrical article which cuts off 100 % of ultraviolet rays having a wavelength of 400 nm or less but does not cut off red and infrared rays. As the cylindrical article, an article being made of polypropylene containing an ultraviolet absorbing agent was used. In order to cut off red or infrared rays, a film which cuts off red rays (containing 0.1 % by weight of phthalocyanine blue) or infrared rays (containing a naphthalocyanine compound) was wound around the outer surface of the cylindrical article, respectively. In the first group, 100 % of ultraviolet rays having a wavelength of 400 nm or less was cut off and red rays having a wavelength of 560 to 700 nm was cut off with a maximum cutting percentage of 38 %. In the second group, 100 % of ultraviolet rays having a wavelength of 400 nm or less was cut off and infrared rays having a wavelength of 700 nm or greater was cut off with a maximum cutting percentage of 75 %. Moreover, in the third group, 100 % of ultraviolet rays having a wavelength of 400 nm or less was cut off.

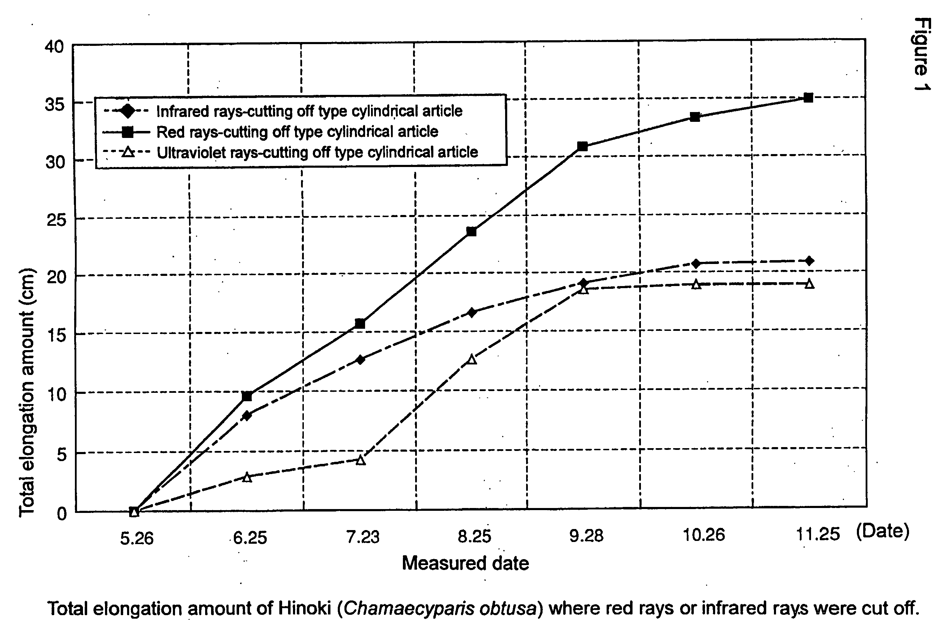

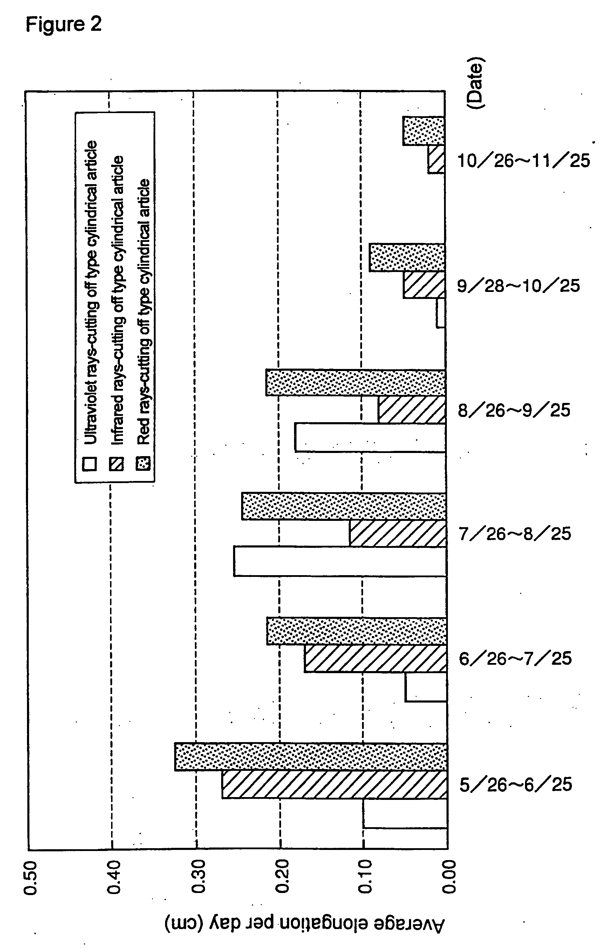

Next, the seedlings of Hinoki were grown until November 25, 1998 under the sunlight. Each total elongation amount per month is shown in Figure 1. The total elongation amount in centimeter unit indicates an elongated amount from the seedling height on May 26, 1998. In addition, average elongation per day for one month is shown in Figure 2.

From these Figures 1 and 2, it can be seen that the growth rate of Hinoki seedlings where used the red rays-cutting off type cylindrical article increase all of each month. The growth promoting effect in the infrared rays-cutting off type cylindrical article is smaller than that in the red rays-cutting off type cylindrical article. In addition, it can also be seen that the infrared rays-cutting off type cylindrical article shows significantly growth inhibiting effect of the seedlings from July to September.

### Experimental Example 2

Twenty seedlings of Hinoki having a height of about 40 to 50 cm were divided into the first group (red rays were cut off) and second group (blue rays were cut off) such that each mean height of the groups becomes approximately equal. On December 17, 1998, the day after about one month from planting, each of seedlings of the first group was covered with a red rays-cutting off type cylindrical article of the first aspect of the present invention (containing 0.15 % by weight of phthalocyanine blue), and each of seedlings of the second group was covered with the blue rays-cutting off type cylindrical article of the third aspect of the present invention (containing 0.025 % by weight of a mixture of quinacridone red and monoazo yellow). As the cylindrical article, an article made of polypropylene and having a thickness of 0.7 mm was used. In the first group, 100 % of ultraviolet rays having a wavelength of 400 nm or less was cut off and red rays having a wavelength of 560 to 700 nm was cut off with a maximum cutting percentage of 44 %. In the second group, 100 % of ultraviolet rays having a wavelength of 400 nm or less was cut off and blue rays having a wavelength of 400 to 500 nm was cut off with a maximum cutting percentage of 80 %.

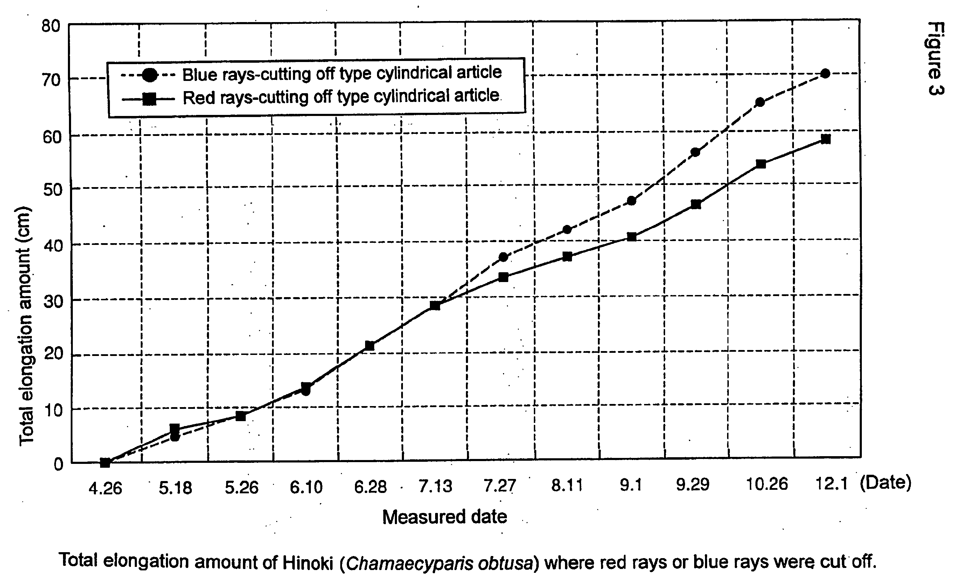

Next, the Hinoki seedlings were grown until December 1, 1999 under the sunlight. Each total elongation amount measured at about two weeks intervals (growth period) or at one month intervals is shown in Figure 3. The total elongation amount in centimeter unit indicate an elongated amount from the seedlings height on April 26, 1999.

From Figure 3, it can be seen that the growth of Hinoki seedlings where used the blue rays-cutting off type cylindrical article increase mostly and that the growth promoting effect in the blue rays-cutting off type cylindrical article is greater than the infrared rays-cutting off type cylindrical article. In addition, it can be seen that the blue rays-cutting off type cylindrical article shows significantly growth inhibiting effect of the seedlings after the summer solstice.

### Experimental Example 3

Twenty seedlings of Sugi having a height of about 40 to 50 cm were divided into the first group (red rays were cut off) and second group (blue rays were cut off) such that each mean height of the groups becomes approximately equal. On December 17, 1998, the day after about one month from planting, each of seedlings of the first group was covered with a red rays-cutting off type cylindrical article of the first aspect of the present invention (containing 0.15 % by weight of phthalocyanine blue), and each of seedlings of the second group was covered with a blue rays-cutting off type cylindrical article of the third aspect of the present invention (containing 0.025 % by weight of a mixture of quinacridone red and monoazo yellow). As the cylindrical article, an article made of polypropylene and having a thickness of 0.7 mm was used. In the first group, 100 % of ultraviolet rays having a wavelength of 400 nm or less was cut off and red rays having a wavelength of 560 to 700 nm was cut off with a maximum cutting percentage of 44 %. In the second group, 100 % of ultraviolet rays having a wavelength of 400 nm or less was cut off and blue rays having a wavelength of 400 to 500 nm was cut off with a maximum cutting percentage of 80 %.

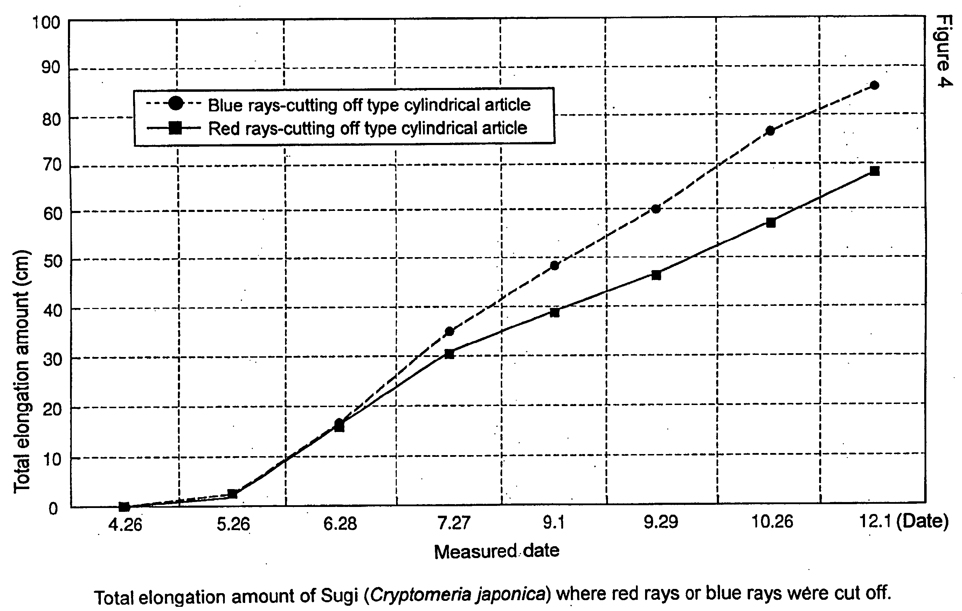

Next, the Sugi seedlings were grown until December 1, 1999 under the sunlight. Each total elongation amount measured at about two weeks intervals (growth period) or at one month intervals are shown in Figure 4. The total elongation amount in centimeter unit indicate an elongated amount from the seedlings height on April 26, 1999.

From Figure 4, it can be seen that the growth of Sugi seedlings where used the blue rays-cutting off type cylindrical article increase mostly and that growth promoting effect in the blue rays-cutting off type cylindrical article is greater than the infrared rays-cutting off type cylindrical article. In addition, it can be seen that the blue rays-cutting off type cylindrical article shows significantly growth inhibiting effect of the seedlings after the summer solstice.

From the foregoing, it can be recognized that a set of cylindrical articles having the different growth promoting or inhibiting effect is provided by combining optional two or more of the red rays-cutting off type cylindrical article, the infrared rays-cutting off type cylindrical article, the blue rays-cutting off type cylindrical article, and a cylindrical article which only cuts 100 % of ultraviolet rays (herein, often referred to as "ultraviolet rays-cutting off type cylindrical article"). Such the set is also within the scope of the present invention.

Furthermore, from the foregoing, the growth of the seedling of the tree can be variously controlled by all cutting off 100 % of ultraviolet rays having a wavelength of 400 nm or less, in addition to cutting off red rays having a wavelength of 560 to 700 nm with a maximum cutting percentage of 30 to 50 %, or cutting off infrared rays having a wavelength of 700 nm or greater with a maximum cutting percentage of 50 to 80%, or cutting off blue rays having a wavelength of 400 to 500 nm with a maximum cutting percentage of 30 to 80 %. Such the method is also within the scope of the present invention.

### Industrial Applicability

According to the present invention, a cylindrical article which can effectively control the growth of planting tree in a forest or dry area is provided.

## Claims

1. A cylindrical article for controlling the growth of a tree **characterized in that** it is made of a material which cuts off red rays having a wavelength of 560 to 700 nm with a maximum cutting percentage of 30 to 50 % and 100 % of ultraviolet rays having a wavelength of 400 nm or less.

2. The cylindrical article according to claim 1, wherein a base of said material is polypropylene or polyethylene.

3. The cylindrical article according to claim 1 or 2, which has a cross section of an even polygon greater than tetragon or a circle.

4. The cylindrical article according to any one of claims 1 to 3, which has a thickness of 0.5 to 10 mm and a length of 0.9 to 1.8 m.

5. The cylindrical article according to any one of claims 1 to 4, wherein a tree, of which the growth is to be controlled, is conifers selected from Pine family (*Pinus densiflora, Pinus Thunbergii*), Cedar family (*Cryptomeria japonica, Chamaecyparis obtusa, Chamaecyparis pisifera, Thujopsis dolabrata, Thuja Standishii*), Fir family (*Abies sachalinensis, Abies firma*), Torreya (*Torreya nucifera*), Spruces (*Picea jezoensis*) and Larch (*Larix leptolepis*) or broad-leaved trees selected from Keaki (*Zelkova serrata*), Kasi family (*Quercus glauca, Quercus myrsineafolia*), Oak family (*Quercus mongolica, Quercus serrata, Quercus acutissima*), Tallowtree (*Sapium sebiferum*), Beech family (*Fagus crenata, Fagus japonica*), Cheetnut (*Castanea crenata*), Maples, Birches and Cherries..

6. A cylindrical article for controlling the growth of a tree **characterized in that** it is made of a material which cuts off infrared rays having a wavelength of 700 nm or greater with a maximum cutting percentage of 50 to 80 % and 100 % of ultraviolet rays having a wavelength of 400 nm or less.

7. The cylindrical article according to claim 6, wherein a base of said material is polypropylene or polyethylene.

8. The cylindrical article according to claim 6 or 7, which has a cross section of an even polygon greater than tetragon or a circle.

9. The cylindrical article according to any one of claims 6 to 8, which has a thickness of 0.5 to 10 mm and a length of 0.9 to 1.8 m.

10. The cylindrical article any one of claims 6 to 9, wherein a tree, the growth of which is to be controlled, is conifers selected from Pine family (*Pinus densiflora, Pinus Thunbergii*), Cedar family (*Cryptomeria japonica*, *Chamaecyparis obtusa*, *Chamaecyparis pisifera, Thujopsis dolabrata, Thuja Standishii*), Fir family (*Abies sachalinensis*, *Abies firma*), Torreya (*Torreya nucifera*), Spruces (*Picea jezoensis*) and Larch (*Larix leptolepis*) or broad-leaved trees selected from Keaki (*Zelkova serrata*), Kasi family (*Quercus glauca, Quercus myrsineafolia*), Oak family (*Quercus mongolica*, *Quercus serrata*, *Quercus acutissima*), Tallowtree (*Sapium sebiferum*), Beech family (*Fagus crenata*, *Fagus japonica*), Cheetnut (*Castanea crenata*), Maples, Birches and Cherries..

11. A cylindrical article for controlling the growth of a tree **characterized in that** it is made of a material which cuts off blue rays having a wavelength of 400 to 500 nm with a maximum cutting percentage of 30 to 80 % and 100 % of ultraviolet rays having a wavelength of 400 nm or less.

12. The cylindrical article according to claim 11, wherein a base of said material is polypropylene or polyethylene.

13. The cylindrical article according to claim 11 or 12, which has a cross section of an even polygon greater than tetragon or a circle.

14. The cylindrical article according to any one of claims 11 to 13, which has a thickness of 0.5 to 10 mm and a length of 0.9 to 1.8 m.

15. The cylindrical article according to any one of claims 11 to 14, wherein a tree, of which the growth is to be controlled, is conifers selected Pine family (*Pinus densiflora, Pinus Thunbergii*), Cedar family (*Cryptomeria japonica, Chamaecyparis obtusa, Chamaecyparis pisifera, Thujopsis dolabrata, Thuja Standishii*), Fir family (*Abies sachalinensis, Abies firma*), Torreya (*Torreya nucifera*), Spruces (*Picea jezoensis*) and Larch (*Larix leptolepis*) or broad-leaved trees selected from Keaki (*Zelkova serrata*), Kasi family (*Quercus glauca, Quercus myrsineafolia*), Oak family (*Quercus mongolica, Quercus serrata, Quercus acutissima*), Tallowtree (*Sapium sebiferum*), Beech family *(Fagus crenata, Fagus japonica*), Cheetnut (*Castanea crenata*), Maples, Birches and Cherries.

16. A set of cylindrical articles for controlling the growth of a tree comprising an optional combination of two or more of the cylindrical articles for controlling the growth of the tree of claims 1, 6 and 11, and a cylindrical article for controlling the growth of a tree which is made of a material cutting off 100 % of ultraviolet rays having a wavelength of 400 nm or less.

17. A method for controlling the growth of a tree comprising below:
(a) cutting off 100 % of ultraviolet rays having a wavelength of 400 nm or less, and
(b) cutting off red rays having a wavelength of 560 to 700 nm with a maximum cutting percentage of 30 to 50 %, or
(c) cutting off infrared rays having a wavelength of 700 nm or greater with a maximum cutting percentage of 50 to 80 %, or
(d) cutting off blue rays having a wavelength of 400 to 500 nm with a maximum cutting percentage of 30 to 80 %.
